# FASCICULE DE BREVET EUROPEEN

(11) **EP 2 509 455 B1**
(45) Date de publication et mention de la délivrance du brevet: **12.09.2018**
(21) Numéro de dépôt: 10803108.9
(22) Date de dépôt: 22.11.2010
(51) Int. Cl.: A23N 15/02

(54) **DISPOSITIF D'EGRENEUR**
ABBEERVORRICHTUNG
DESTEMMING DEVICE

(30) Priorité: 30.11.2009 FR 0958477
(43) Date de publication de la demande: 17.10.2012
(73) Titulaire: Societe Occitane De Maintenance (SOCMA), 11100 Narbonne (FR)
(72) Inventeur: FERRANDEZ, Joseph, F-11100 Narbonne (FR)
(74) Mandataire: Rhein, Alain
(86) Numéro de dépôt international: PCT/FR2010/052478
(87) Numéro de publication internationale: WO 2011/067498

(56) Documents cités:
- EP-A1- 0 826 959
- EP-A1- 2 030 514
- DE-A1- 2 519 120
- FR-A- 1 033 642
- FR-A1- 2 796 249

## Description

L'invention concerne un dispositif d'égreneur pour égrener les grappes de raisins après la vendange, ou autres fruits récoltés en grappes, ainsi qu'une machine à vendanger équipée d'un tel dispositif d'égreneur.

Plus particulièrement, l'invention a pour but de séparer les baies des rafles.

Il est déjà connu du document EP 2 030 514 un dispositif d'égrappoir composé d'une part d'une bande transporteuse plane convoyant les grappes de raisins depuis un lieu de stockage, ou autre, et d'autre part d'un dispositif égreneur disposé au-dessus de ladite bande, sur le trajet emprunté la vendange. Ce dispositif égreneur comprend deux ensembles juxtaposés de bras séparateurs superposés, lesdits bras, qui sont conformés en épingles à cheveux, étant montés oscillants à haute fréquence dans un sens transversal au travers de moyens moteurs. Au contact des bras oscillants, les baies des grappes de raisins sont donc séparées de leurs rafles, l'ensemble retombant sur la bande transporteuse qui peut, selon sa conception, participer au triage des baies et des rafles.

Ce dispositif d'égrappoir présente des inconvénients, notamment en ce qu'il est fréquent que des rafles se coincent dans les bras séparateurs, ce qui génère une baisse d'efficacité, et en ce qu'il est d'un encombrement relativement important, lequel complique son installation sur une machine à vendanger par exemple.

Le document DE 2519120 décrit également un dispositif d'égrappoir, lequel comprend, sur un châssis, une chaîne sans fin portant des éléments secoueurs qu'elle déplace horizontalement au-dessus d'une bande sans fin réceptrice, qui se déplace transversalement au sens de déplacement desdits éléments secoueurs et qui débouche sur une bande de transfert mobile en déplacement, parallèlement au déplacement desdits éléments secoueurs. La vendange est déversée sur les éléments secoueurs qui au gré de leur déplacement longitudinal sont animés transversalement en sorte de faire tomber les baies sur la bande sans fin réceptrice, lesquelles sont amenées jusqu'à la bande de transfert qui les évacue, tandis que les rafles demeurent dans les éléments secoueurs, notamment sous l'effet d'un flux d'air dirigé du bas vers le haut, et sont évacuées au moyen de peignes disposés au-delà de la bande sans fin réceptrice. Un tel dispositif présente des inconvénients, outre sa complexité du fait qu'il mette en oeuvre au moins trois chemins de transfert, il est peu performant et surtout encombrant.

La présente invention a pour but de proposer un dispositif d'égreneur permettant de remédier aux divers inconvénients précités, notamment en étant compact et de conception simple.

Ainsi, le dispositif d'égreneur pour égrener les grappes de raisins après la vendange, ou autres fruits récoltés en grappes, c'est-à-dire détacher les baies des rafles selon l'invention, se caractérise essentiellement en ce qu'il comporte d'une part deux ensembles de secouage, disposés côte à côte, délimitant un espace vertical dans lequel la vendange est destinée à être amenée par gravité, et d'autre part des moyens de réception des baies et des rafles disposés sous lesdits ensembles de secouage.

Selon une caractéristique du dispositif d'égreneur selon l'invention, chacun des ensembles de secouage comprend une série de doigts parallèles d'orientation verticale, régulièrement espacés, suspendus à un arbre horizontal, tandis que les deux arbres horizontaux des deux ensembles de secouage sont parallèles et reliés à un moyen moteur permettant de leur transmettre un mouvement de pivotement oscillatoire en sorte d'entraîner lesdits doigts dans un mouvement pendulaire oscillatoire.

Selon une autre caractéristique additionnelle du dispositif d'égreneur selon l'invention, chacun des doigts présente d'une part à partir de sa zone de solidarisation à l'arbre qui le porte, un segment d'orientation oblique dirigé vers le bas et l'espace vertical en sorte que les ensembles de secouage forment une trémie pour la réception de la vendange, et d'autre part, dans le prolongement dudit segment d'orientation oblique, un segment d'orientation verticale.

Selon une autre caractéristique additionnelle du dispositif d'égreneur selon l'invention, il comporte des moyens de réglage de l'entraxe des arbres des deux ensembles de secouage de manière à permettre le réglage de l'écartement des doigts d'un ensemble de secouage par rapport aux doigts de l'autre ensemble de secouage.

Selon un mode de réalisation particulier du dispositif d'égreneur selon l'invention, la partie extrême de chacun des doigts est réalisée dans un matériau présentant des qualités de ressort, tandis que le reste du doigt est réalisé dans un matériau dur et rigide, tandis que l'extrémité de chacun des doigts est liée au châssis du dispositif d'égreneur, au travers de moyens fixation.

Selon une autre caractéristique additionnelle du mode de réalisation particulier du dispositif d'égreneur selon l'invention, les moyens fixation des extrémités des doigts au châssis sont rendues mobiles en déplacement, de sorte à permettre de régler la tension desdits doigts.

Selon un autre mode de réalisation particulier du dispositif d'égreneur selon l'invention, les doigts sont réalisés dans un matériau dur et rigide, et leur extrémité libre est liée au châssis du dispositif d'égreneur au travers d'une liaison élastiques de rappel dans la direction opposée à l'espace vertical.

Selon une autre caractéristique additionnelle du dispositif d'égreneur selon l'invention, il comporte des moyens d'entraînement des rafles agissant dans ledit espace vertical traversé par la vendange.

Selon une autre caractéristique additionnelle du dispositif d'égreneur selon l'invention, les moyens d'entraînement des rafles comportent des éléments mus en déplacement en sorte qu'au moins une de leur partie se déplace dans l'espace vertical traversé par la vendange dans un mouvement allant du haut vers le bas, et en passant entre des doigts.

Selon une autre caractéristique additionnelle du dispositif d'égreneur selon l'invention, les éléments mus en déplacement consistent en des disques parallèles montés sur un arbre parallèle à ceux des ensembles de secouage, et mû en rotation.

La présente invention a également pour objet une machine à vendanger qui se caractérise en ce qu'elle est équipée d'un dispositif d'égreneur tel que défini précédemment.

Les avantages et les caractéristiques du dispositif d'égreneur selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique partielle en perspective d'un dispositif d'égreneur selon l'invention, en cours d'utilisation.
- la figure 2 représente une vue schématique partielle élévation d'une variante du même dispositif d'égreneur.
- la figure 3 représente une vue schématique partielle en perspective d'une variante du même dispositif d'égreneur.
- la figure 4 représente une vue schématique en perspective de la même variante du même dispositif d'égreneur.
- la figure 5 représente une vue schématique en élévation de la même variante du même dispositif d'égreneur.

Le dispositif d'égreneur selon l'invention qui va être décrit, est destiné à être monté sur une machine à vendanger, ou bien installé dans un chai.

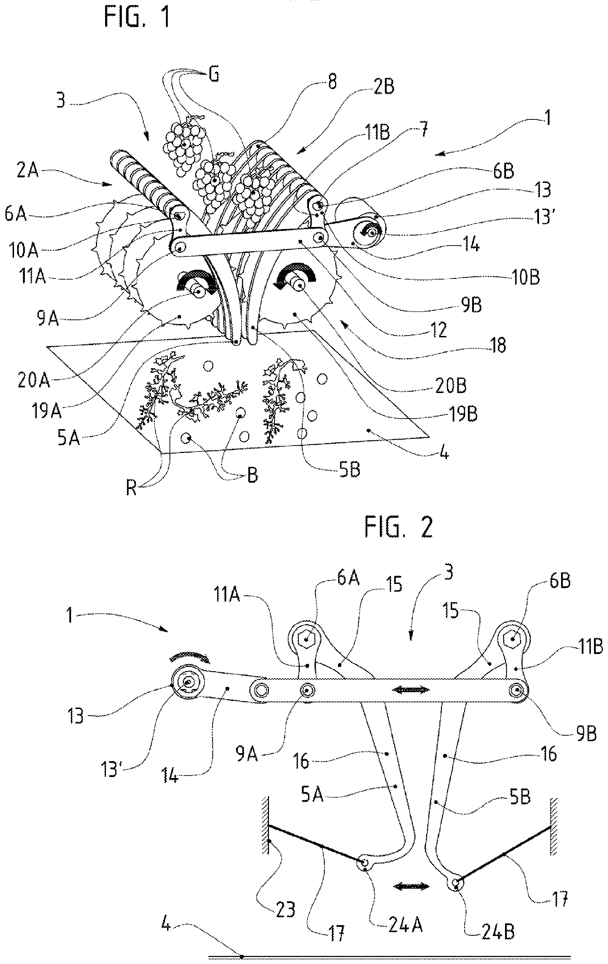

En référence à la figure 1, on peut voir qu'un dispositif d'égreneur 1 pour égrener les grappes de raisins après la vendange selon l'invention, comporte d'une part deux ensembles de secouage 2A et 2B, disposés côte à côte et en regard l'un de l'autre, délimitant un espace vertical 3 dans lequel la vendange est destinée à être amenée par gravité, et d'autre part des moyens de réception 4, visibles sur la figure 2, pouvant être notamment, une bande de transport disposée sous lesdits ensembles de secouage 2A et 2B.

Préférentiellement, chaque ensemble de secouage 2A et 2B est composé d'une série de doigts parallèles, respectivement 5A et 5B, d'orientation verticale ou inclinée, suspendus à un arbre horizontal, respectivement, 6A et 6B.

Les arbres horizontaux 6A ou 6B sont montés pivotants, tandis que les doigts 5A et 5b, sont calés en rotation au travers d'un méplat 7 ou, tel que visible sur la figure 2, au travers d'une lumière d'accouplement non ronde, hexagonale par exemple.

Les doigts 5A et 5B sont par ailleurs maintenus espacés deux à deux sur les arbres, respectivement 6A et 6B, par des moyens d'entretoisement 8, tels que des rondelles.

Par ailleurs, les extrémités 10A et 10B des arbres horizontaux, respectivement 6A et 6B, sont équipées chacune, calé en rotation, d'un levier, respectivement 11A et 11B, eux-mêmes reliés à une bielle 12, au travers de liaisons pivots, respectivement 9A et 9B.

La bielle 12 est par ailleurs liée à un moteur 13, au travers d'une biellette 14, montée sur le moteur 13 par l'intermédiaire d'un excentrique 13'.

Ainsi, le moteur 13 permet de transmettre, par l'intermédiaire de l'excentrique 13', de la biellette 14, de la bielle 12 et des leviers 11A et 11B, un mouvement de pivotement oscillatoire, qui peut être d'une fréquence de quelques dizaines de hertz, aux doigts 5A et 5B, qui oscillent ainsi dans un mouvement pendulaire.

Au contact des doigts 5A et 5B oscillants, les baies B se séparent des rafles R, lorsque les grappes G de raisins sont déversées dans l'espace vertical 3.

Sur la figure 1, selon un premier mode de réalisation, on observera que les doigts 5A et 5B sont, à proximité de leur rattachement aux arbres 6A et 6B, de forme sensiblement courbe de manière à créer vers le haut un évasement destiné à permettre l'engagement de la vendange, tandis que leurs extrémités libres sont sensiblement droites, légèrement inclinées vers le bas et l'espace 3, en sorte de créer un rétrécissement de ce dernier.

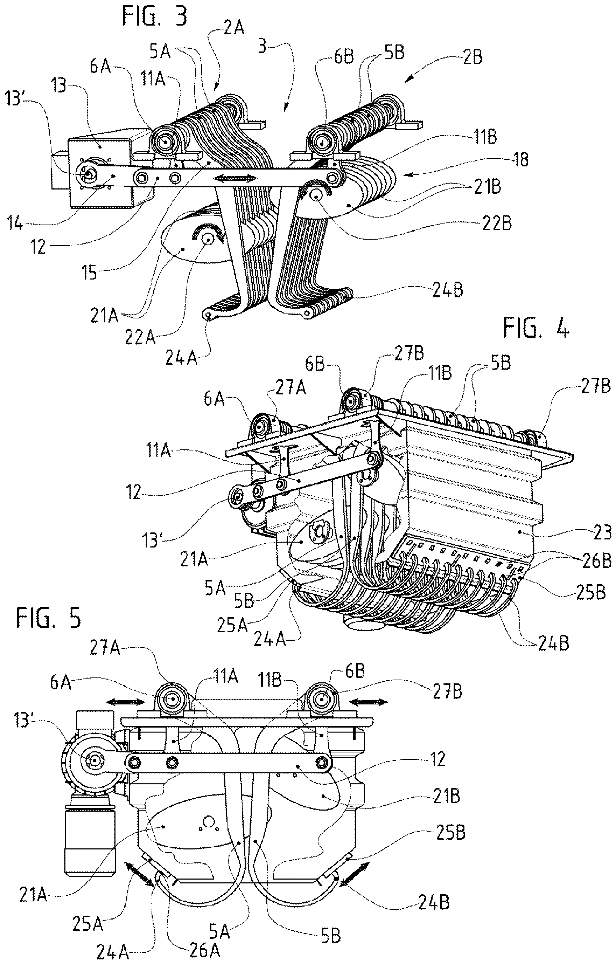

Sur les figures 2 et 3 on a représenté un second mode de réalisation où les doigts 5A et 5B présentent également au niveau de leur zone de solidarisation à leur arbre 6A et 6B, un segment d'orientation oblique 15 dirigé vers le bas et l'espace vertical 3 en sorte que les ensembles de secouage 2A et 2B forment un évasement pour la réception de la vendange, et d'autre part, dans le prolongement dudit segment d'orientation oblique, un segment d'orientation sensiblement verticale 16.

Dans ce second mode de réalisation, les doigts 5A et 5B comportent à leur extrémité inférieure libre, respectivement 24A et 24B, un segment courbe muni en bout d'un moyen d'accrochage d'un lien 17, lui-même accroché au châssis 23 du dispositif d'égreneur 1.

Le lien 17 peut soit être élastique afin d'assurer le rappel des doigts 5A et 5B dans la direction opposée à l'espace vertical 3, et d'éviter les chocs lors des changements de direction en cours d'oscillation, soit être indéformable, mais dans ce cas c'est l'extrémité libre de chacun des doigts 5A et 5B qui présente des qualités ressort et qui assure l'amortissement.

Avantageusement, le dispositif 1 comporte également des moyens 18 d'entraînement des rafles R agissant dans ledit espace vertical 3 traversé par la vendange pour entraîner les rafles R et éviter qu'elles demeurent coincées dans l'espace vertical 3, ce qui permet de cadencer la descente des grappes et d'éviter un engorgement.

Selon un mode de réalisation de l'invention visible sur la figure 1, les moyens d'entraînement 18 sont constitués par deux ensembles de disques coaxiaux 19A et 19B comportant des dents, chacun monté sur un arbre horizontal 20A et 20B, fixés au châssis, ,non représenté.

Ces arbres 20A et 20B sont parallèles et positionnés en sorte que les disques 19A coopèrent avec la série de doigts 5A et que les disques 19B coopèrent avec la série de doigts 5B, les disques 19A s'intercalant entre les doigts 5A, tandis que les disques 19B s'intercalent entre les doigts 5B, pour pénétrer en partie dans l'espace vertical 3.

Les disques 19A et 19B sont mus en rotation, en sens inverse et en sorte que leur bord se déplace du haut vers le bas dans l'espace vertical 3.

Dans le mode de réalisation de la figure 1, les disques 19A et 19B ne sont pas intercalés entre chaque paire de doigts respectivement 5A et 5B, mais entre une paire sur deux, et de manière décalée pour les disques 19A par rapport aux disque 19B, en sorte qu'ils puissent agir au plus profond dans l'espace vertical 3, sans risque de contact des disques 19A avec les disques 19B.

Dans le mode de réalisation de la figure 3, les moyens 18 d'entraînement des rafles sont constitués par deux ensembles de disques 21A et 21B de forme général oblongue ou ellipsoïdale et montés, respectivement, sur un arbre horizontal 22A et 22B, et mus en contre rotation.

Les disques 21A et 21B sont intercalés entre chaque paire de doigts 5A et 5B, et afin d'éviter tous risques de contact entre les disques 21A et les disques 21B, les arbres 22A et 22B sont décalés dans le sens vertical.

On notera que selon une variante, il est également possible que les arbres 22A et 22B soient disposés sur un même niveau, ou à des niveaux très sensiblement égaux, dans ce cas les disques 21A et 21B sont décalés angulairement les uns par rapport aux autres.

Une telle configuration est par exemple représentée sur les figures 4 et 5.

Sur ces figures 4 et 5 on peut également voir que selon une variante, les extrémités libres 24A et 24B des doigts, respectivement 5A et 5B, sont solidarisées au châssis 23, par l'intermédiaire d'une plaque interface, respectivement 25A et 25B, dans laquelle sont pratiqués des ouvertures, respectivement 26A et 26B, réparties selon, non limitativement, deux niveaux, en sorte de permettre, selon que les extrémités 24A et 25B, sont engagées en vue de solidarisation, dans les ouvertures 26A et 26B, de l'un ou l'autre niveau, un réglage de la tension des doigts 5A et 5B qui bien entendu présentent une certaine souplesse.

Sur ces figures on peut également voir qu'il est prévu de pouvoir modifier l'entraxe des arbres 6A et 6B, par déplacement des paliers respectivement 27A et 27B, qui les portent, de manière à permettre de régler l'écartement entre les doigts 5A et 5B, et d'élargir ou de rétrécir l'accès à l'espace vertical, ou d'ouvrir ou de fermer l'espace 3.

## Revendications

1. Dispositif d'égreneur pour égrener les grappes de raisins (G) après la vendange, ou autres fruits récoltés en grappes, c'est-à-dire détacher les baies (B) des rafles (R), le dispositif comportant d'une part deux ensembles de secouage (2A, 2B), disposés côte à côte, délimitant un espace vertical (3) dans lequel la vendange est destinée à être amenée par gravité, et d'autre part des moyens (4) de réception des baies (B) et des rafles (R) disposés sous lesdits ensembles de secouage,
dans lequel chacun des ensembles de secouage (2A, 2B) comprend une série de doigts parallèles (5A, 5B) d'orientation verticale, régulièrement espacés, suspendus à un arbre horizontal (6A, 6B), les deux arbres horizontaux (6A, 6B) des deux ensembles de secouage (2A, 2B) sont parallèles et reliés à un moyen moteur (13), **caractérisé en ce que** le moyen moteur (13) permet de transmettre aux doigts un mouvement de pivotement oscillatoire en sorte d'entraîner lesdits doigts (5A, 5B) dans un mouvement pendulaire oscillatoire.

2. Dispositif d'égreneur selon la revendication 2, **caractérisé en ce que** chacun des doigts (5A, 5B) présente, d'une part à partir de sa zone de solidarisation à l'arbre (6A, 6B) qui le porte, un segment d'orientation oblique (15) dirigé vers le bas et l'espace vertical (3) en sorte que les ensembles de secouage forment une trémie pour la réception de la vendange, et d'autre part, dans le prolongement dudit segment d'orientation oblique (15), un segment (16) d'orientation verticale.

3. Dispositif d'égreneur selon la revendication 1 ou la revendication 2, **caractérisé en ce qu'**il comporte des moyens de réglage de l'entraxe des arbres (6A, 6B) des deux ensembles de secouage (2A, 2B) de manière à permettre le réglage de l'écartement des doigts (5A, 5B) d'un ensemble de secouage (2A, 2B) par rapport aux doigts (5A, 5B) de l'autre ensemble de secouage (2A, 2B).

4. Dispositif d'égreneur selon l'une quelconque des revendications 1 à 3, **caractérisé en ce que** la partie extrême libre (24A, 24B) de chacun des doigts (5A, 5B) est réalisée dans un matériau présentant des qualités de ressort, tandis que le reste du doigt (5A, 5B) est réalisé dans un matériau dur et rigide, tandis que l'extrémité (24A, 24B) de chacun des doigts (5A, 5B) est liée au châssis (23) du dispositif d'égreneur (1), au travers de moyens de fixation (26A, 26B).

5. Dispositif d'égreneur selon la revendication 4, **caractérisé en ce que** les moyens de fixation (26A, 26B) des extrémités des doigts (5A, 5B) au châssis (23) sont mobiles en déplacement, de sorte à permettre de régler la tension desdits doigts (5A, 5B).

6. Dispositif d'égreneur selon l'une quelconque des revendications 1 à 5, **caractérisé en ce que** les doigts (5A, 5B) sont réalisés dans un matériau dur et rigide, et leur extrémité libre (24A, 24B) est liée au châssis (23) du dispositif d'égreneur (1) au travers d'une liaison élastique (17) de rappel dans la direction opposée à l'espace vertical (3).

7. Dispositif d'égreneur selon l'une quelconque des revendications 1 à 6, **caractérisé en ce qu'**il comporte des moyens (18) d'entraînement des rafles (R) agissant dans l'espace vertical (3) traversé par la vendange.

8. Dispositif d'égreneur selon la revendication 7, **caractérisé en ce que** les moyens (18) d'entraînement des rafles comportent des éléments (21A, 21B) mus en déplacement en sorte qu'au moins une de leur partie se déplace dans l'espace vertical (3) traversé par la vendange dans un mouvement allant du haut vers le bas, et en passant entre des doigts (5A, 5B).

9. Dispositif d'égreneur selon la revendication 8, **caractérisé en ce que** les éléments mus en déplacement consistent en des disques parallèles (21A, 21B) montés sur un arbre parallèle (20A, 20B) à ceux (6A, 6B) des ensembles de secouage (2A, 2B), et mus en rotation.

## Patentansprüche

1. Entkömungsgerät zum Entkörnen von Weintrauben (G) nach der Ernte, oder anderen Früchten, die in Trauben geerntet werden, d.h. zum lösen der Beeren (B) von den Geästen (R), wobei die Vorrichtung einerseits zwei Schütteleinbeiten (2A, 2B), die Seite an Seite angeordnet sind, die einen vertikalen Raum (3) begrenzen, in den die Ernte dazu bestimmt ist, durch Schwerkraft gebracht zu werden, und andererseits Mittel (4) zur Aufnahme der Beeren (B) und der Geästen (R), die unter den Schütteleinheiten angeordnet sind, umfasst,
wobei jede der Schütteleinheiten (2A, 2B) eine Reihe von vertikal ausgerichteten, regelmäß beanstandeten parallelen Fingern (5A, 5B) umfasst, die an einer horizontalen Welle (6A, 6B) aufgehängt sind, wobei die zwei horizontalen Wellen (6A, 6B) der beiden Schütteleinheiten (2A, 2B) parallel und mit einer Motoreinrichtung (13) verbunden sind, **dadurch gekennzeichnet, dass** die Motoreinrichtung (13) es erlaubt, auf den Fingern eine oszillierende Schwenkbewegung zu übertragen, so dass die besagten Finger (5A, 5B) in einer oszillierenden Pendelbewegung angetrieben werden.

2. Entkörnungsvorrichtung nach Anspruch 2, **dadurch gekennzeichnet, dass** jeder der Finger (5A, 5B) einerseits ab seinem Bereich der festen Verbindung mit der Welle (6A, 6B), die ihn trägt, ein Segment schräger Ausrichtung (15), das nach unten und den vertikalen Raum (3) gerichtet ist, so dass die Schütteleinheiten einen Trichter zur Aufnahme der Ernte bilden, und andererseits in der Verlängerung des Segments schräger Ausrichtung (15) ein Segment (16) vertikaler Ausrichtung aufweist.

3. Entkörnungsvorrichtung nach Anspruch 1 oder Anspruch 2, **dadurch gekennzeichnet, dass** sie Mittel zum Einstellen des Achsabstandes der Wellen (6A, 6B) der zwei Schütteleinheiten (2A, 2B) umfasst, sodass das Einstellen des Abstandes zwischen den Fingern (5A, 5B) einer Schütteleinheit (2A, 2B) relativ zu den Fingern (5A, 5B) der anderen Schütteleinheit (2A, 2B) ermöglicht wird.

4. Entkörnungsvorrichtung nach iregendeinem der Ansprüche 1 bis 3, **dadurch gekennzeichnet, dass** der freie Endteil (24A, 24B) jedes der Finger (5A, 5B) aus einem Federeigenschaften aufweisenden Material gefertigt ist, während der Rest des Fingers (5A, 5B) aus hartem und starrem Material gefertigt ist, während das Ende (24A, 24B) jedes der Finger (5A, 5B) über Befestigungsmittel (26A, 26B) mit dem Rahmen (23) der Entkörnungsvorrichtung (1) verbunden ist.

5. Entkörnungsvorrichtung nach Anspruch 4, **dadurch gekennzeichnet, dass** die Mittel zur Befestigung (26A, 26B) der Enden der Finger (5A, 5B) am Rahmen (23) verschiebbar sind, sodass die Einstellung der Streckung der besagten Finger (5A, 5B) ermöglicht wird.

6. Entkörnungsvorrichtung nach irgendeinem der Ansprüche 1 bis 5, **dadurch gekennzeichnet, dass** die Finger (5A, 5B) aus hartem und starrem Material gefertigt sind und ihr freies Ende (24A, 24B) über eine elastische Verbindung (17) zur Rückstellung in der dem vertikalen Raum (3) entgegengesetzten Richtung mit dem Rahmen (23) der Entkörnungsvorrichtung (1) verbunden ist.

7. Entkörnungsvorrichtung nach irgendeinem der Ansprüche 1 bis 6, **dadurch gekennzeichnet, dass** sie Mittel (18) zum Antreiben der Geäste (R), die in dem von der Ernte durchquerten vertikalen Raum (3) wirken, umfasst,

8. Entkörnungsvorrichtung nach Anspruch 7, **dadurch gekennzeichnet, dass** die Mittel (18) zum Antreiben der Geäste in Verschiebung angetgriebene Elemente (21A, 21B) umfassen, so dass sich mindestens eines ihrer Teile im vertikalen Raum, (3), der von der Ernte in einer Bewegung von oben nach unten durchquert wird, wobei diese zwischen den Fingern (5A, 5B) geht, bewegt.

9. Entkörnungsvorrichtung nach Anspruch 8, **dadurch gekennzeichnet, dass** die in Verschiebung angetgriebene Elemente aus parallelen Scheiben (21A, 21B) bestehen, die auf einer Welle (20A, 20B) parallel zu denjenigen (6A, 6B) der Schütteleinheiten (2A, 2B) montiert und in Rotation versetzt werden.

## Claims

1. A ginning device for ginning the bunches of grapes (G) after the harvest, or other fruits harvested in clusters, i.e. removing the berries (B) from the stems (R), the device including, on the one hand, two shaking assemblies (2A, 2B), arranged side by side, delimiting a vertical space (3) into which the harvest is intended to be brought by gravity and, on the other hand, means (4) for receiving the berries (B) and stems (R) arranged under said shaking units,
wherein each of the shaking assemblies (2A, 2B) comprises a series of vertically oriented, regularly spaced parallel fingers (5A, 5B), hung on a horizontal shaft (6A, 6B), the two horizontal shafts (6A, 6B) of the two shaking assemblies (2A, 2B) are parallel and connected to a motor means (13), wherein the motor means (13) permits to transmit to the fingers an oscillatory pivoting movement so as to drive said fingers (5A, 5B) in an oscillatory pendulum motion.

2. The ginning device according to claim 2, wherein each of the fingers (5A, 5B) has, on the one hand, from its area of integrally fastening to the shaft (6A, 6B), which carries it, an obliquely orientated segment (15) directed downwards and towards the vertical space (3), so that the shaking units form a hopper for receiving the harvest and, on the other hand, in the extension of said obliquely orientated segment (15), a vertically orientated segment (16).

3. The ginning device according to claim 1 or claim 2, wherein it includes means for adjusting the distance of axes of the shafts (6A, 6B) of the two shaking assemblies (2A, 2B), so as to permit the adjustment of the distance between the fingers (5A, 5B) of a shaking assembly (2A, 2B) relative to the fingers (5A, 5B) of the other shaking assembly (2A, 2B).

4. The ginning device according to any one of claims 1 to 3, wherein the free end portion (24A, 24B) of each of the fingers (5A, 5B) is made of a material having springy qualities, while the rest of the finger (5A, 5B) is made of hard and rigid material, while the end (24A, 24B) of each of the fingers (5A, 5B) is connected to the frame (23) of the ginning device (1) through fastening means (26A, 26B).

5. The ginning device according to claim 4, wherein the means for fastening (26A, 26B) the ends of the fingers (5A, 5B) to the frame (23) are movable in displacement, so as to permit to adjust the stretching of said fingers (5A, 5B).

6. The ginning device according to any one of claims 1 to 5, wherein the fingers (5A, 5B) are made of a hard and rigid material, and their free end (24A, 24B) is linked to the frame (23) of the ginning device (1) through a resilient connection (17) for restoring in the direction opposite to the vertical space (3).

7. The ginning device according to any one of claims 1 to 6, wherein it includes means (18) for driving the bunches (R), which act in the vertical space (3) crossed by the harvest.

8. The ginning device according to claim 7, wherein the means (18) for driving the bunches include elements (21A, 21B) moved in displacement so that at least one of their portions moves in the vertical space (3) crossed by the harvest in a movement from top to bottom, and while passing between fingers (5A, 5B).

9. The ginning device according to claim 8, wherein the elements moved in displacement consist of parallel discs (21A, 21B) mounted on a shaft (20A, 20B) parallel to those (6A, 6B) of the shaking assemblies (2A, 2B), and moved in rotation.
